# EUROPÄISCHE PATENTSCHRIFT

(11) **EP 4 703 674 B1**
(45) Veröffentlichungstag und Bekanntmachung des Hinweises auf die Patenterteilung: **11.11.2026**
(21) Anmeldenummer: 24197213.2
(22) Anmeldetag: 29.08.2024
(51) Int. Cl.: G01B 7/004, G01D 5/20

(54) **INDUKTIVE POSITIONSMESSEINRICHTUNG**
INDUCTIVE POSITION MEASURING DEVICE
DISPOSITIF INDUCTIF DE MESURE DE POSITION

(43) Veröffentlichungstag der Anmeldung: 04.03.2026
(73) Patentinhaber: Dr. Johannes Heidenhain GmbH, 83301 Traunreut (DE)
(72) Erfinder: ECKART, Matthias, 83454 Anger (DE); HEINEMANN, Christoph, 83236 Übersee (DE); KLAPPAUF, Christof, 83404 Ainring (DE)

(56) Entgegenhaltungen:
- EP-A1- 3 904 836
- EP-A2- 2 372 511
- DE-A1- 102016 213 220
- DE-A1- 102018 001 573
- US-B1- 6 605 939

## Beschreibung

### GEBIET DER TECHNIK

Die Erfindung betrifft eine induktive Positionsmesseinrichtung gemäß dem Oberbegriff des Anspruchs 1.

### STAND DER TECHNIK

Aus der Patentschrift WO 2020 088 869 A1 ist eine Bewegungsvorrichtung mit einem Positionsbestimmungssystem bekannt, welche eine statische und eine bewegte Baugruppe besitzt. Beide Baugruppen verfügen über eine eigene Stromversorgung und umfassen mehrere kreisförmig ausgebildete Spulen oder Kondensatorplatten, welche miteinander elektromagnetisch wechselwirken.

Nachteilhaft am vorgenannten Stand der Technik ist, dass sowohl die bewegte als auch die unbewegte Baugruppe elektrische Bauelemente nutzt, die an eine aktive Elektronik angeschlossen werden müssen. Dies hat zur Folge, dass jede Baugruppe eine eigene Stromversorgung und eine eigene Datenverbindung benötigt, was insbesondere bei der stationären Baugruppe zu einem deutlich komplexeren Aufbau führt.

Ferner ist ein Magnetsensor zur Positionsbestimmung eines beweglichen Objekts aus DE 10 2016 213 220 A1 bekannt.

### ZUSAMMENFASSUNG DER ERFINDUNG

Der Erfindung liegt die Aufgabe zugrunde eine induktive Positionsmesseinrichtung bereitzustellen, durch welche eine Positionsbestimmung einer bewegten Baugruppe in mehreren Freiheitsgraden möglich ist und die gleichzeitig kompakt und kostengünstig in der Herstellung ist.

Diese Aufgabe wird erfindungsgemäß durch die Merkmale des Anspruches 1 gelöst. Vorteilhafte Ausgestaltungen und Weiterbildungen sind in den jeweils abhängigen Ansprüchen angegeben.

Die erfindungsgemäße induktive Positionsmesseinrichtung umfasst eine erste Baugruppe mit einer ersten Wechselwirkungsoberfläche und eine zweite Baugruppe mit einer zweiten Wechselwirkungsoberfläche. Die beiden Baugruppen sind in einer dritten Richtung einander gegenüberliegend angeordnet und relativ zueinander bewegbar. Die erste Baugruppe umfasst mehrere erste Feldwechselwirkungsmittel, welche parallel zur ersten Wechselwirkungsoberfläche angeordnet und an eine Auswerteelektronik angeschlossen sind. Die zweite Baugruppe umfasst mehrere zweite Feldwechselwirkungsmittel, welche flächig verteilt über die zweite Wechselwirkungsoberfläche angeordnet sind. Die ersten und zweiten Feldwechselwirkungsmittel sind in elektromagnetische Wechselwirkung bringbar. Die induktive Positionsmesseinrichtung umfasst zumindest vier erste Feldwechselwirkungsmittel in Form von Linearsensoren, welche als Viereck entlang einer ersten und zweiten Richtung angeordnet sind, wobei sich die ersten Feldwechselwirkungsmittel zumindest teilweise in den Ecken der Viereck-Anordnung überlagern.

Gemäß einer vorteilhaften Weiterbildung der Erfindung umfassen die ersten Feldwechselwirkungsmittel jeweils zumindest ein Erregermittel zum Erzeugen eines elektromagnetischen Felds und zumindest ein Empfangsmittel zum Empfangen eines elektromagnetischen Felds.

In weiter Ausgestaltung umfassen die ersten Feldwechselwirkungsmittel
- jeweils ein erstes Empfangsmittel und ein zweites Empfangsmittel, welche einen periodischen Verlauf mit einer konstanten Periodenlänge aufweisen, wobei die Empfangsmittel in der ersten oder zweiten Richtung um ein Viertel ihrer Periodenlänge zueinander versetzt angeordnet sind, und
- jeweils ein Erregermittel, welches die beiden Empfangsmittel, insbesondere in Form eines Vierecks, umgibt.

Mit Vorteil umfasst die erste Baugruppe vier erste Feldwechselwirkungsmittel, die in der ersten Wechselwirkungsoberfläche und jeweils senkrecht zueinander angeordnet sind.

Ist eine Ausführung mit den vier ersten Feldwechselwirkungsmitteln vorgesehen, so sind vorteilhafterweise die Empfangsmittel der vier ersten Feldwechselwirkungsmittel derart ausgebildet, dass ihre Schwingungsbreite mindestens einer Periodenlänge entspricht.

Alternativ umfasst die erste Baugruppe acht erste Feldwechselwirkungsmittel, die in der ersten Wechselwirkungsoberfläche und paarweise parallel zu Feldwechselwirkungspaaren angeordnet sind, wobei die vier Feldwechselwirkungsmittelpaare dann jeweils senkrecht zueinander angeordnet sind.

Ist eine Ausführung mit den acht Feldwechselwirkungsmitteln bzw. vier Feldwechselwirkungspaaren vorgesehen, so sind vorteilhafterweise die ersten Empfangsmittel von zumindest einem der Feldwechselwirkungspaare gleich ausgebildet und seriell verschaltet. Zusätzlich sind die zweiten Empfangsmittel von zumindest einem der Feldwechselwirkungspaare gleich aus-gebildet und seriell verschaltet. Die Schwingungsbreite zumindest eines der Empfangsmittel beträgt weniger als die Hälfte der Periodenlänge und der Abstand der beiden ersten Empfangsmittel bzw. der beiden zweiten Empfangsmittel innerhalb zumindest eines Feldwechselwirkungspaars beträgt die Hälfte der Periodenlänge.

Hierunter ist jener Abstand innerhalb eines Feldwechselwirkungspaars zu verstehen, der zwischen den Empfangsmitteln des einen ersten Feldwechselwirkungsmittels und den Empfangsmitteln des weiteren ersten Feldwechselwirkungsmittels bezüglich den virtuellen Nulldurchgängen ausgebildet ist.

Bevorzugt sind bei jedem der vier Feldwechselwirkungspaare die ersten Empfangsmittel gleich ausgebildet und die ersten Empfangsmittel innerhalb eines Feldwechselwirkungspaars seriell verschaltet. Ebenso sind bevorzugt bei jedem der vier Feldwechselwirkungspaare die zweiten Empfangsmittel gleich ausgebildet und die ersten Empfangsmittel innerhalb eines Feldwechselwirkungspaars seriell verschaltet.

Mit Vorteil sind die zweiten Feldwechselwirkungsmittel
- viereckig ausgebildet, insbesondere als quadratische Flächen, und
- gleich groß und rasterartig gleichverteilt auf der zweiten Wechselwirkungsoberfläche angeordnet.

Vorteilhafterweise handelt es sich bei dem Viereck der Viereckanordnung um ein Rechteck, und insbesondere um ein Quadrat.

Vorteilhafterweise sind die zweiten Feldwechselwirkungsmittel mit einer planaren Technologie, insbesondere durch eine Dickschichttechnik und ergänzend oder alternativ eine Dünnschichttechnik hergestellt.

Vorzugsweise sind die ersten Feldwechselwirkungsmittel durch die Auswerteelektronik mit einer vorbestimmten Umschaltfrequenz abwechselnd betreibbar.

Mit Vorteil ist die vorbestimmte Umschaltfrequenz abhängig von der aktuellen relativen Geschwindigkeit und ergänzend oder alternativ den historischen (also zeitlich zurückliegenden) relativen Geschwindigkeiten der ersten und ergänzend oder alternativ der zweiten Baugruppe.

Zudem ist vorgesehen, dass die Auswerteelektronik wenigstens ein Signalgeneratormodul, wenigstens ein Auswertemodul und wenigstens eine Umschalteinheit umfasst. Die ersten Feldwechselwirkungsmittel sind über die wenigstens eine Umschalteinheit wahlweise einzeln oder paarweise, entweder an das Auswertemodul oder an das Signalgeneratormodul angeschlossen.

In weiterer Ausgestaltung ist vorgesehen, dass die Umschalteinheit zumindest einen Multiplexer und zumindest ein Steuermodul umfasst, wobei das Steuermodul den zumindest einen Multiplexer in Abhängigkeit der Umschaltfrequenz so ansteuert, dass ein paarweiser Anschluss der in einer identischen Richtung verlaufenden ersten Feldwechselwirkungsmittel mit dem Auswertemodul bzw. dem Signalerzeugungsmodul erfolgt.

In weiterer Ausgestaltung ist vorgesehen, dass die zweite Baugruppe nicht an eine aktive Energieversorgungseinrichtung und Datenverarbeitungseinrichtung angeschlossen ist.

Somit ist nur die erste Baugruppe an eine aktive Energieversorgungseinrichtung und Datenverarbeitungseinrichtung angeschlossen.

Die Erfindung wird nachstehend auch hinsichtlich weiterer Merkmale und Vorteile anhand der Beschreibung von Ausführungsbeispielen und unter Bezugnahme auf die beiliegenden, schematischen Zeichnungen näher erläutert.

### KURZE BESCHREIBUNG DER ZEICHNUNGEN

Es zeigt:
- Figur 1: eine perspektivische Ansicht einer induktiven Positionsmesseinrichtung umfassend eine erste Baugruppe und eine zweite Baugruppe;
- Figur 2: eine Draufsicht auf eine zweite Baugruppe;
- Figur 3: eine Draufsicht auf ein erstes Ausführungsbeispiel eines ersten Feldwechselwirkungsmittels;
- Figur 4: eine Draufsicht auf ein zweites Ausführungsbeispiel eines ersten Feldwechselwirkungsmittels;
- Figur 5: eine Ansicht einer ersten Wechselwirkungsoberfläche einer ersten Baugruppe;
- Figuren 6a, 6b: eine schematische Darstellung einer induktiven Positionsmesseinrichtung in Draufsicht, bei der eine Relativdrehung einer ersten Baugruppe um die Koordinatenachse der dritten Richtung gezeigt ist;
- Figur 7: ein schematisches Blockdiagramm, das die Auswerteelektronik der ersten Baugruppe der induktiven Positionsmesseinrichtung zeigt.

### BESCHREIBUNG DER AUSFÜHRUNGSFORMEN

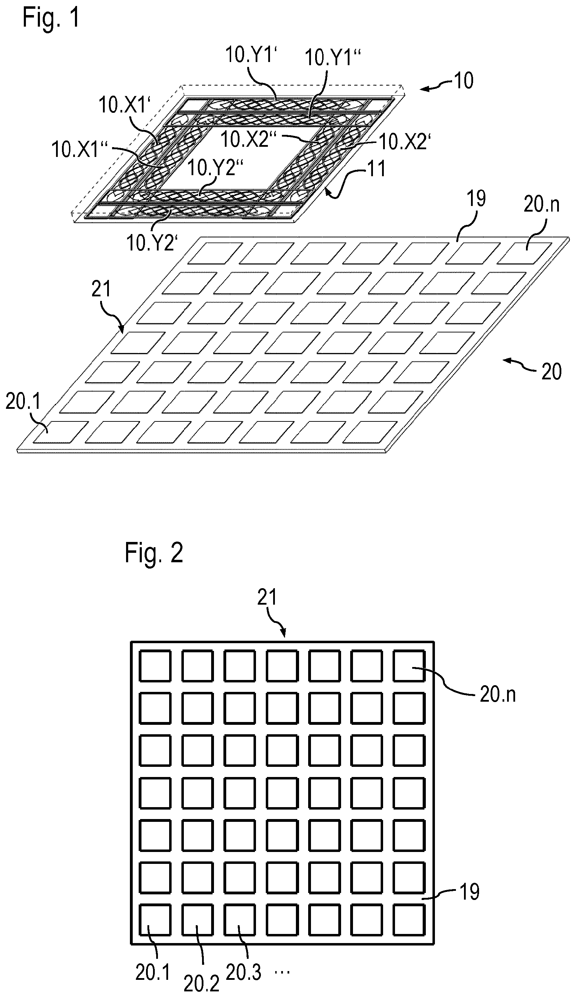

Die induktive Positionsmesseinrichtung 1 des im Folgenden vorgestellten Ausführungsbeispiels weist gemäß der Figur 1 eine erste Baugruppe 10 und eine zweite Baugruppe 20 auf, welche sich in einer dritten Richtung z gegenüberliegen und relativ zueinander bewegt werden können. Die erste Baugruppe 10 und die zweite Baugruppe 20 sind zueinander beabstandet angeordnet, so dass zwischen den beiden Baugruppen 10, 20 ein Luftspalt ausgebildet ist.

Die erste Baugruppe 10 umfasst eine erste Wechselwirkungsoberfläche 11 mit mehreren ersten Feldwechselwirkungsmitteln 10.X1', 10.X1", 10.X2', 10.X2", 10.Y1', 10.Y1", 10.Y2', 10.Y2", wobei die ersten Feldwechselwirkungsmittel 10.X1', 10.X1", 10.X2', 10.X2", 10.Y1', 10.Y1", 10.Y2', 10.Y2" parallel zur ersten Wechselwirkungsoberfläche 11 und plan innerhalb dieser angeordnet sind. Die erste Baugruppe 10 wird zum Erzeugen zumindest eines Erregersignals S1 und zum Empfangen zumindest eines Empfangssignals S2 mit elektrischer Energie versorgt. Dies kann beispielsweise über ein Kabel oder drahtlos erfolgen. Die Energiequelle kann beispielsweise eine Batterie innerhalb der ersten Baugruppe 10 sein oder sich außerhalb der ersten Baugruppe 10 befinden.

Die zweite Baugruppe 20 umfasst eine zweite Wechselwirkungsoberfläche 21 mit mehreren zweiten Feldwechselwirkungsmitteln 20.1 bis 20.n. Die zweiten Feldwechselwirkungsmittel 20.1 bis 20.n sind auf oder plan innerhalb der zweiten Wechselwirkungsoberfläche 21 angeordnet und flächig über diese verteilt. Die zweite Baugruppe 20 bildet eigenständig kein eigenes Magnetfeld aus und wird auch nicht aktiv mit elektrischer Energie über Kabel oder dergleichen versorgt, da die zweite Baugruppe 20 rein passiv mit der ersten Baugruppe 10 interagiert.

Die zweite Wechselwirkungsoberfläche 21 der zweiten Baugruppe 20 ist in der Regel größer ausgebildet als die erste Wechselwirkungsoberfläche 11 der ersten Baugruppe 10, so dass auch bei einer Positionierung der ersten Baugruppe 10 im Randbereich der zweiten Baugruppe 20 stets ein ausreichendes Überlappen zwischen den beiden Baugruppen 10, 20 besteht.

Die beiden Wechselwirkungsoberflächen 11, 21 sind gegenüberliegend angeordnet und so beabstandet, dass eine Positionsbestimmung durch ein elektromagnetisches Wechselwirken zwischen den ersten und zweiten Feldwechselwirkungsmitteln 10.X1', 10.X1", 10.X2', 10.X2", 10.Y1', 10.Y1", 10.Y2', 10.Y2" bzw. 20.1 bis 20.n möglich ist. Dies ist insbesondere dann gegeben, wenn sich die ersten und zweiten Feldwechselwirkungsmittel 10.X1', 10.X1", 10.X2', 10.X2", 10.Y1', 10.Y1", 10.Y2', 10.Y2" bzw. 20.1 bis 20.n in der dritten Richtung z betrachteten Draufsicht zumindest teilweise überlappen.

Während des Betreibens der induktiven Positionsmesseinrichtung 1 können sich die Position und die Ausrichtung der Baugruppen 10, 20 zueinander relativ in den drei Richtungen x, y, z ändern. Vorteilhafterweise liegen die drei Richtungen x, y, z orthogonal zueinander. Durch das elektromagnetische Wechselwirken der ersten Feldwechselwirkungsmittel 10.X1', 10.X1", 10.X2', 10.X2", 10.Y1', 10.Y1", 10.Y2', 10.Y2" mit den zweiten Feldwechselwirkungsmitteln 20.1 bis 20.n wird die aktuelle Position und Ausrichtung in sechs Freiheitsgraden durch die induktive Positionsmesseinrichtung 1 bestimmt und ausgewertet. Für die Auswertung der Position und Ausrichtung der ersten Baugruppe 10 ist eine Auswerteelektronik innerhalb oder außerhalb der ersten Baugruppe 10 vorgesehen sein. Ein Übertragen der Daten kann beispielsweise kabelgebunden oder alternativ auch drahtlos erfolgen.

Bevorzugt ist eine der Baugruppen unbewegt und stationär, während die andere Baugruppe frei bewegbar ist. Insbesondere wenn die zweite Wechselwirkungsoberfläche 21 der zweiten Baugruppe 20 um ein Vielfaches größer ist als die erste Wechselwirkungsoberfläche 11 der ersten Baugruppe 10, ist eine unbewegte und stationäre Anordnung der zweiten Baugruppe 20 sinnvoll. Alternativ kann aber auch die erste Baugruppe 10 unbewegt und stationär angeordnet sein und die zweite Baugruppe 20 relativ zur ersten Baugruppe 10 bewegt werden. Dies ist beispielsweise dann sinnvoll, wenn eine Versorgung der bewegten Baugruppe mit elektrischer Energie nicht möglich ist.

Figur 2 zeigt eine bevorzugte Ausgestaltung der zweiten Wechselwirkungsoberfläche 21 der zweiten Baugruppe 20. Die zweite Wechselwirkungsoberfläche 21 kann weitestgehend eine beliebige Topografie aufweisen bzw. beliebig gekrümmt sein, wobei sie vorzugsweise eben ausgebildet ist.

Bei der zweiten Wechselwirkungsoberfläche 21 handelt es sich vorzugsweise um die Oberfläche einer Leiterplatte, die durch ein Verfahren der Dünnschichttechnik und ergänzend oder alternativ der Dickschichttechnik hergestellt ist. Die Leiterplatte umfasst ein elektrisch isolierendes Grundmaterial 19, beispielsweise ein faserverstärktes Epoxidharz. Auf das Grundmaterial 19 der Leiterplatte ist eine elektrisch leitfähige Schicht, insbesondere aus Kupfer, aufgebracht, welche so strukturiert ist, dass mehrere zweite Wechselwirkungsmittel 20.1 bis 20.n ausgebildet sind.

Alternativ können die einzelnen zweiten Feldwechselwirkungsmittel 20.1 bis 20.n und die zweite Wechselwirkungsoberfläche 21 auch aus einem Substrat ausgebildet sein. Insbesondere kann es sich hierbei um ein Metallsubstrat handeln, bei dem die einzelnen zweiten Feldwechselwirkungsmittel 20.1 bis 20.n in Form von Erhöhungen ausgebildet sind, wobei zwischen den einzelnen zweiten Feldwechselwirkungsmitteln 20.1 bis 20.n kein Metallsubstrat vorhanden ist. Die Bereiche zwischen den einzelnen zweiten Feldwechselwirkungsmitteln 20.1 bis 20.n können entweder als Leerraum bzw. Luftspalt ausgebildet sein oder beispielsweise mit einem Epoxidharz gefüllt sein, so dass eine plane Oberfläche ausgebildet ist.

Die zweiten Feldwechselwirkungsmittel 20.1 bis 20.n sind in Form eines viereckigen Rasters über die zweite Wechselwirkungsoberfläche 21 verteilt angeordnet und besitzen einen definierten Abstand zueinander. Die Spalten und Zeilen aus den zweiten Feldwechselwirkungsmitteln 20.1 bis 20.n des Rasters sind entlang der orthogonal verlaufenden ersten und zweiten Richtung x, y angeordnet. Alle zweiten Feldwechselwirkungsmittel 20.1 bis 20.n sind identisch dimensioniert ausgebildet, insbesondere in Form von Quadraten. Jedoch sind auch andere Formen denkbar, beispielsweise Kreise, Rechtecke, Spiralen, etc.

Das Raster kann, wie in Figur 2 dargestellt, vollständig mit zweiten Feldwechselwirkungsmitteln 20.1 bis 20.n befüllt sein, so dass die zweiten Feldwechselwirkungsmittel 20.1 bis 20.n rasterartig gleichverteilt sind. Alternativ können die zweiten Feldwechselwirkungsmittel 20.1 bis 20.n auch ungleich über die zweite Wechselwirkungsoberfläche 21 verteilt sein, so dass das Raster beispielsweise einzelne Stellen oder Bereiche ohne zweite Feldwechselwirkungsmittel 20.1 bis 20.n umfasst.

Vorzugsweise ist jedes zweite Feldwechselwirkungsmittel 20.1 bis 20.n konstruktiv gleich ausgebildet und alle zweiten Feldwechselwirkungsmittel 20.1 bis 20.n in einem Raster äquidistant zueinander beabstandet angeordnet.

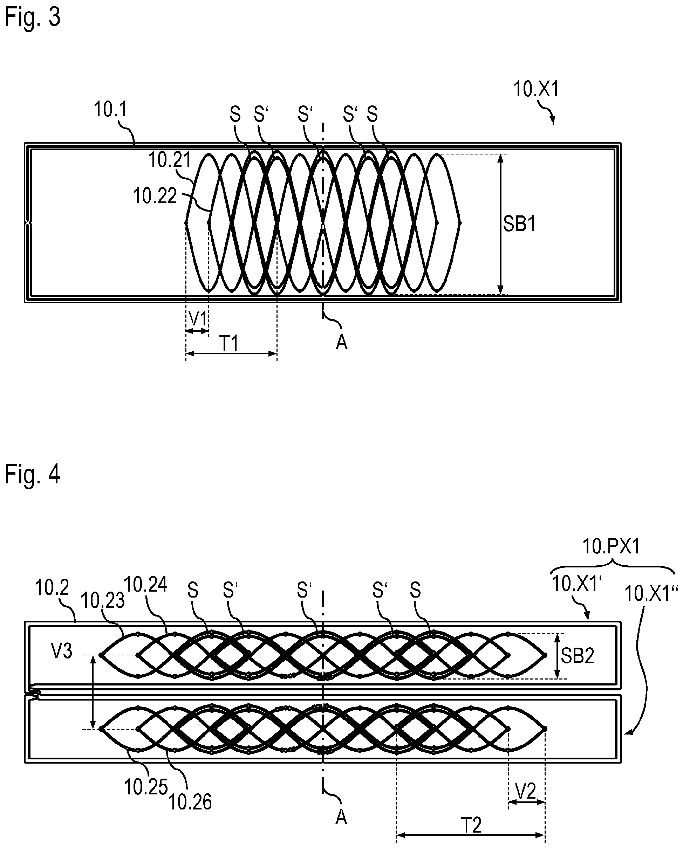

Figur 3 zeigt ein erstes Ausführungsbeispiel der ersten Feldwechselwirkungsmittel 10.X1, 10.X2, 10.Y1, 10.Y2. Das dargestellte erste Feldwechselwirkungsmittel 10.X1 ist ein länglicher Linearsensor umfassend ein planares Erregermittel 10.1 zum Erzeugen elektromagnetischer Felder und zwei planare Empfangsmittel 10.21, 10.22 zum Empfangen elektromagnetischer Felder.

Das erste Empfangsmittel 10.21 ist als Empfängerleiterbahn ausgebildet und setzt sich aus mehreren Leiterbahnabschnitten zusammen. Der grundlegende Verlauf des ersten Empfangsmittels 10.21 ähnelt einem sinusförmigen Verlauf, wobei die Größe der einzelnen Leiterbahn-Amplituden konstruktiv nicht unbedingt konstant ist. Zwei angrenzende Leiterbahn-Amplituden des grundlegenden Verlaufs - bestehend aus einer positiven und einer negativen Leiterbahn-Amplitude - besitzen eine Periodenlänge T1 und eine Schwingungsbreite SB1.

Das erste Empfangsmittel 10.21 ist unterteilbar in einen hinführenden und einen rückführenden Abschnitt. Der hinführende Abschnitt ähnelt in seinem grundlegenden Verlauf dem Funktionsgraphen der Funktion *f*(*x*) *= a* · sin(*x*) mit $a ∈ {ℝ}^{+}$. Der rückführende Abschnitt ähnelt in seinem grundlegenden Verlauf dem Funktionsgraphen der Funktion *g*(*x*) *= -a* · sin(x) mit $a ∈ {ℝ}^{+}$. Das heißt, der rückführende Abschnitt des ersten Empfangsmittels 10.21 entspricht näherungsweise dem an einer Symmetrielinie gespiegelten hinführenden Abschnitt.

Das zweite Empfangsmittel 10.22 ist wie das erste Empfangsmittel 10.21 als Empfängerleiterbahn ausgebildet, jedoch um ein Viertel der Periodenlänge T1 versetzt zum ersten Empfangsmittel 10.21 angeordnet (Versatz V1). Der Versatz V1 erfolgt insbesondere entlang der ersten Richtung x oder entlang der zweiten Richtung y. Durch die versetzte Anordnung der beiden Empfangsmittel 10.21, 10.22 können entsprechend phasenverschobene Signale generiert werden. Die beiden Empfangsmittel 10.21, 10.22 sind elektrisch so verschaltet, dass diese ein 0°-Signal und ein 90°-Signal liefern.

Die beiden Empfangsmittel 10.21, 10.22 unterscheiden sich in ihrer Länge voneinander. Beispielsweise umfasst das erste Empfangsmittel 10.21 konstruktiv eine Länge von drei Perioden mit jeweils der Periodenlänge T1 und das zweite Empfangsmittel 10.22 jeweils eine Länge von zweieinhalb Perioden mit der Periodenlänge T1.

Neben einem sinusförmigen Verlauf der Empfangsmittel 10.21, 10.22 sind auch alternative Kurvenformen denkbar, beispielsweise ein dreieckförmiger Verlauf, etc.

Unter der Schwingungsbreite SB1 bei den Empfangsmitteln 10.21, 10.22 ist die Höhe der Auslenkung zwischen dem Minimalwert und dem Maximalwert innerhalb einer Periodenlänge T1 zu verstehen. Sie verläuft senkrecht zur Richtung der Periodenlänge T1 bzw. senkrecht zur ersten bzw. zweiten Richtung x, y.

Gemäß dem ersten Ausführungsbeispiel der ersten Feldwechselwirkungsmittel 10.X1, 10.X2, 10.Y1, 10.Y2 sind die Schwingungsbreiten SB1 des ersten Empfangsmittels 10.21 und die Schwingungsbreiten SB1 des zweiten Empfangsmittels 10.22 im Mittel gleich ausgebildet und entsprechen mindestens der Periodenlänge T1.

Die in Figur 3 dargestellten Empfangsmittel 10.21, 10.22 besitzen Schwingungsbreiten SB1 die ungefähr dem 1,5-fachen der Periodenlänge T1 entsprechen.

Die beiden Empfangsmittel 10.21, 10.22 werden aus mehreren Leiterbahnabschnitten in unterschiedlichen Lagen eines Trägersubstrats ausgebildet. Einzelheiten zu einem solchen mehrlagigen Aufbau aus Leiterbahnabschnitten sind in der europäischen Patentanmeldung EP23200280 vom 28.09.2023 beschrieben, auf welche insofern ausdrücklich Bezug genommen wird.

Zur Kompensation von Nick-Verkippungen können die Empfangsmittel 10.21, 10.22 stellenweise über zusätzliche Schleifen S, S' verfügen, die ebenfalls aus Leiterbahnabschnitten gebildet werden. Hierzu werden an vorbestimmten Stellen des grundsätzlichen Verlaufs die Schleifen S, S' unterhalb der Leiterbahn-Amplituden platziert. An Stellen mit den zusätzlichen Schleifen S, S' weichen die Leiterbahn-Amplituden der Empfangsmittel 10.21, 10.22 vom grundsätzlichen Verlauf ab und werden um einen vorbestimmten Betrag nach außen, d.h. in Richtung des Erregungsmittels 10.1, verschoben. Die Schleifen S, S' sind bezüglich der Leiterbahn-Amplituden des grundsätzlichen Verlaufs geringfügig nach innen, d.h. in Richtung des virtuellen Nulldurchgangs des grundsätzlichen Verlaufs der Empfangsmittel 10.21, 10.22, verschoben. In Summe ergibt sich bei einer konstruktiv abweichenden Leiterbahn-Amplitude mit Schleife jedoch ein identisch großes Amplitudensignal, wie bei einer gewöhnlichen Leiterbahn-Amplitude ohne Schleife.

Die Schleifen S, S' sind Teil der Empfängerleiterbahn und werden vorzugsweise derart auf dem ersten Feldwechselwirkungsmittel 10.X1, 10.X2, 10.Y1, 1 0.Y2 angeordnet, so dass sie spiegelsymmetrisch zu einer Achse A - welche den hinführenden bzw. rückführenden Abschnitt in gleiche Teile unterteilt - angeordnet sind.

Die Schleifen S des ersten Empfangsmittels 10.21 können entweder innerhalb des hinführenden Abschnitts und ergänzend oder alternativ innerhalb des rückführenden Abschnitts der Empfängerleiterbahn ausgebildet sein.

Die Schleifen S' des zweiten Empfangsmittels 10.22 können ebenfalls entweder innerhalb des hinführenden Abschnitts und ergänzend oder alternativ innerhalb des rückführenden Abschnitts der Empfängerleiterbahn ausgebildet sein.

Die beiden Empfangsmittel 10.21, 10.22 sind durch das Erregermittel 10.1 umgeben, d. h. von allen Seiten umschossen. Das Erregermittel 10.1 ist als Erregerleiterbahn und konstruktiv in Form eines Vierecks ausgebildet. Insbesondere handelt es sich bei dem Viereck um zumindest ein Rechteck.

Gemäß einem zweiten Ausführungsbeispiel der ersten Feldwechselwirkungsmittel 10.X1', 10.X1", 10.X2', 10.X2", 10.Y1', 10.Y1", 10.Y2', 10.Y2" ist deren Anordnung auch zu Feldwechselwirkungspaaren 10.PX1, 10.PX2, 10.PY1, 10.PY2 möglich.

Das in Figur 4 dargestellte Feldwechselwirkungspaar 10.PX1 umfasst das erste Feldwechselwirkungsmittel 10.X1' und das weitere erste Feldwechselwirkungsmittel 10.X1". Die beiden ersten Feldwechselwirkungsmittel 10.X1', 10.X1" sind als längliche Linearsensoren ausgebildet und umfassen gemeinsam ein planares Erregermittel 10.2 (gezeigt in Figur 4) oder alternativ jeweils ein planares Erregermittel zum Erzeugen elektromagnetischer Felder (nicht gezeigt).

Das erste Feldwechselwirkungsmittel 10.X1' umfasst ein planares erstes Empfangsmittel 10.23 und ein planares zweites Empfangsmittel 10.24 zum Empfangen von elektromagnetischen Feldern. Auch das weitere erste Feldwechselwirkungsmittel 10.X' umfasst ein planares erstes Empfangsmittel 10.25 und ein planares zweites Empfangsmittel 10.26 zum Empfangen von elektromagnetischen Feldern.

Die ersten Feldwechselwirkungsmittel 10.X1', 10.X1" sind zueinander beabstandet angeordnet, so dass zwischen den beiden ersten Feldwechselwirkungsmitteln 10.X1', 10.X1" bezüglich den Empfangsmitteln 10.23, 10.24 und den Empfangsmitteln 10.25, 10.26 ein Versatz V3 ausgebildet ist. Der Versatz V3 erfolgt insbesondere entlang der ersten Richtung x oder entlang der zweiten Richtung y. Vorteilhafterweise entspricht der Versatz V3 einer halben Periodenlänge T2.

Eine Ausgestaltung der ersten Feldwechselwirkungsmittel 10.X1', 10.X1", 10.X2', 10.X2", 10.Y1', 10.Y1", 10.Y2', 10.Y2" gemäß dem zweiten Ausführungsbeispiel und deren Anordnung zu Feldwechselwirkungspaaren 10.PX1, 10.PX2, 10.PY1, 10.PY2 sorgt dafür, dass die Querempfindlichkeit der induktiven Messeinrichtung 1 reduziert wird. Insbesondere wird hierbei die Querempfindlichkeit senkrecht zur Richtung x bzw. zur Richtung y reduziert.

Die ersten Empfangsmittel 10.23, 10.25 sind als Empfängerleiterbahnen ausgebildet und setzt sich aus mehreren Leierbahnabschnitten zusammen. Der grundlegende Verlauf der ersten Empfangsmittel 10.23, 10.25 ähneln jeweils einem sinusförmigen Verlauf, wobei die Größe der einzelnen Leiterbahn-Amplituden konstruktiv nicht unbedingt konstant ist. Zwei angrenzende Leiterbahn-Amplituden des grundlegenden Verlaufs - bestehend aus einer positiven und einer negativen Leiterbahn-Amplitude - besitzen eine Periodenlänge T2 und eine Schwingungsbreite SB2.

Die ersten Empfangsmittel 10.23, 10.25 sind jeweils unterteilbar in einen hinführenden und einen rückführenden Abschnitt. Ein hinführender Abschnitt ähnelt in seinem grundlegenden Verlauf dem Funktionsgraphen der Funktion *f*(*x*) *= a* · sin(x) mit $a ∈ {ℝ}^{+}$. Ein rückführender Abschnitt ähnelt in seinem grundlegenden Verlauf dem Funktionsgraphen der Funktion *g*(*x*) = *-a* · sin(*x*) mit $a ∈ {ℝ}^{+}$. Das heißt, ein rückführender Abschnitt der ersten Empfangsmittel 10.23, 10.25 entspricht näherungsweise einem an einer Symmetrielinie gespiegelten hinführenden Abschnitt.

Die zweiten Empfangsmittel 10.24, 10.26 sind wie die ersten Empfangsmittel 10.23, 10.25 als Empfängerleiterbahn ausgebildet, jedoch um ein Viertel der Periodenlänge T2 versetzt zum zugehörigen ersten Empfangsmittel 10.23, 10.25 angeordnet (Versatz V2). Der Versatz V2 erfolgt insbesondere entlang der ersten Richtung x oder entlang der zweiten Richtung y. Durch die versetzte Anordnung der beiden Empfangsmittel 10.23, 10.25 bzw. der beiden Empfangsmittel 10.24, 10.26 können entsprechend phasenverschobene Signale generiert werden. Die beiden Empfangsmittel 10.24, 10.26 bzw. die beiden Empfangsmittel 10.24, 10.26 sind elektrisch so verschaltet, dass diese ein 0°-Signal und ein 90°-Signal liefern.

Die beiden Empfangsmittel 10.23, 10.24 unterscheiden sich in ihrer Länge voneinander. Beispielsweise umfasst das erste Empfangsmittel 10.23 eine Länge von drei Perioden mit jeweils der Periodenlänge T2 und das zweite Empfangsmittel 10.24 eine Länge von zweieinhalb Perioden mit jeweils der Periodenlänge T2.

Bei einer Ausgestaltung der ersten Feldwechselwirkungsmittel 10.X1', 10.X1", 10.X2', 10.X2", 10.Y1', 10.Y1", 10.Y2', 10.Y2" gemäß dem zweiten Ausführungsbeispiel ist das erste Empfangsmittel 10.23 des ersten Feldwechselwirkungsmittels 10.X1' in Serie geschaltet mit dem ersten Empfangsmittel 10.25 des weiteren ersten Feldwechselwirkungsmittels 10.X1". Zudem ist das zweite Empfangsmittel 10.24 des ersten Feldwechselwirkungsmittels 10.X1' in Serie geschaltet mit dem zweiten Empfangsmittel 10.26 des weiteren ersten Feldwechselwirkungsmittels 10.X". Durch diese serielle Verschaltung ergibt sich im Ergebnis jeweils ein 0°-Signal und ein 90°-Signal mit erhöhten Signalamplituden.

Neben einem sinusförmigen Verlauf der Empfangsmittel 10.23, 10.24, 10.25, 10.26 sind auch alternative Kurvenformen denkbar, beispielsweise ein dreieckförmiger Verlauf, etc.

Unter der Schwingungsbreite SB2 bei den Empfangsmitteln 10.23, 10.25, 10.24, 10.26 ist die Höhe der Auslenkung zwischen dem Minimalwert und dem Maximalwert innerhalb einer Periodenlänge T2 zu verstehen. Sie verläuft senkrecht zur Richtung der Periodenlänge T2 bzw. senkrecht zur ersten bzw. zweiten Richtung x, y.

Gemäß dem zweiten Ausführungsbeispiel der ersten Feldwechselwirkungsmittel 10.X1', 10.X1", 10.X2', 10.X2", 10.Y1', 10.Y1", 10.Y2', 10.Y2" sind die Schwingungsbreiten SB2 eines ersten Empfangsmittels 10.23, 10.25 und die Schwingungsbreite SB2 eines zugehörigen zweiten Empfangsmittels 10.24, 10.26 im Mittel gleich ausgebildet und entsprechen höchstens der halben Periodenlänge T2.

Die in Figur 3 dargestellten Empfangsmittel 10.23, 10.25, 10.24, 10.26 besitzen Schwingungsbreiten SB2, die ungefähr einem Drittel der Periodenlänge T2 entsprechen.

Die ersten und zweiten Empfangsmittel 10.23, 10.25, 10.24, 10.26 werden ebenso wie im ersten Ausführungsbeispiel aus mehreren Leiterbahnabschnitten in unterschiedlichen Lagen eines Substrats ausgebildet.

Zur Kompensation von Nick-Verkippungen können die Empfangsmittel 10.23, 10.25, 10.24, 10.26 ebenfalls stellenweise über zusätzliche Schleifen S, S' verfügen, die aus Leiterbahnabschnitten gebildet werden. Hierzu werden an vorbestimmten Stellen des grundsätzlichen Verlaufs die Schleifen S, S' unterhalb der Leiterbahn-Amplituden platziert. An Stellen mit den zusätzlichen Schleifen S, S' weichen die Leiterbahn-Amplituden der Empfangsmittel 10.21, 10.22 vom grundsätzlichen Verlauf ab und werden um einen vorbestimmten Betrag nach außen, d.h. in Richtung des Erregungsmittels 10.1, verschoben. Die Schleifen S, S' sind bezüglich der Leiterbahn-Amplituden des grundsätzlichen Verlaufs geringfügig nach innen, d.h. in Richtung des virtuellen Nulldurchgangs des grundsätzlichen Verlaufs der Empfangsmittel 10.23, 10.25, 10.24, 10.26, verschoben. In Summe ergibt sich bei einer konstruktiv abweichenden Leiterbahn-Amplitude mit Schleife jedoch ein identisch großes Amplitudensignal, wie bei einer gewöhnlichen Leiterbahn-Amplitude ohne Schleife.

Die Schleifen S, S' sind Teil einer Empfängerleiterbahn und werden vorzugsweise auf den beiden ersten Feldwechselwirkungsmitteln 10.X1', 10.X1" derart angeordnet, dass sie spiegelsymmetrisch zu einer Achse A angeordnet sind, welche einen hinführenden bzw. rückführenden Abschnitt in gleiche Teile unterteilt.

Die Schleifen S der ersten Empfangsmittel 10.23, 10.25 können entweder innerhalb eines hinführenden Abschnitts und ergänzend oder alternativ innerhalb eines rückführenden Abschnitts der Empfängerleiterbahnen ausgebildet sein.

Die Schleifen S' der zweiten Empfangsmittel 10.24, 10.26 können ebenfalls entweder innerhalb eines hinführenden Abschnitts und ergänzend oder alternativ innerhalb eines rückführenden Abschnitts der Empfängerleiterbahnen ausgebildet sein.

Wie bereits zuvor erläutert, sind die Empfangsmittel 10.23, 10.25, 10.24, 10.26 entweder von einem gemeinsamen Erregermittel 10.2 oder von mehreren separaten Erregermitteln umgeben, d. h. von allen Seiten umschlossen. Das Erregermittel 10.2 ist als Erregerleiterbahn und konstruktiv in Form zumindest eines Vierecks ausgebildet. Insbesondere handelt es sich bei dem Viereck um zumindest ein Rechteck.

Beispielsweise kann das eine Erregermittel 10.2 zwei Rechtecke ausbilden, jeweils ein Rechteck um die Empfangsmittel 10.23, 10.24 und ein Rechteck um die Empfangsmittel 10.25, 10.26, wie es in Figur 4 dargestellt ist. Alternativ können auch zwei Erregermittel vorgesehen sein, wobei jeweils ein Erregermittel ein Rechteck um die Empfangsmittel 10.23, 10.24 und ein weiteres Erregermittel ein Rechteck um die Empfangsmittel 10.25, 10.26 ausbildet.

Die ersten Feldwechselwirkungsmittel 10.X1, 10.X1',10.X1", 10.X2, 10.X2', 10.X2", 10.Y1, 10.Y1', 10.Y1", 10.Y2, 10.Y2', 10.Y2" sind innerhalb der ersten Wechselwirkungsoberfläche 11 der ersten Baugruppe 10 ausgebildet. Bei der erste Wechselwirkungsoberfläche 11 handelt es sich um die Oberfläche einer Leiterplatte, die durch ein Verfahren der Dünnschichttechnik und ergänzend oder alternativ der Dickschichttechnik hergestellt ist. Zum Ausbilden der strukturierten ersten Feldwechselwirkungsmittel 10.X1, 10.X1',10.X1", 10.X2, 10.X2', 10.X2", 10.Y1, 10.Y1', 10.Y1", 10.Y2, 10.Y2', 10.Y2" können mehrere gesonderte übereinander liegende und elektrisch leitfähige Schichten vorgesehen sein, die durch Isolierschichten voneinander getrennt sind. An vordefinierten Stellen, den sogenannten Durchkontaktierungen, besteht eine elektrische Verbindung zwischen den Leiterbahnen der verschiedenen eklektisch leitfähigen Schichten.

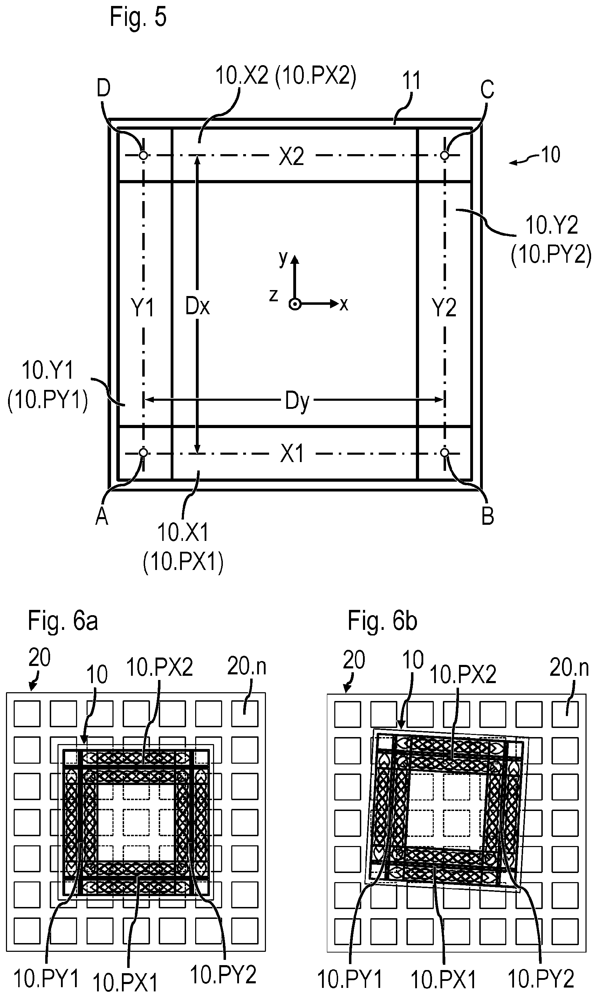

Wie in Figur 5 gezeigt ist, erstrecken sich die beiden ersten Feldwechselwirkungsmittel 10.X1, 10.X2 bzw. die beiden Feldwechselwirkungspaare 10.PX1, 10.PX2 parallel zur ersten Richtung x und sind zueinander beabstandet mit einem Abstand Dx angeordnet. Die beiden ersten Feldwechselwirkungsmittel 10.Y1, 10.Y2 bzw. die beiden Feldwechselwirkungspaare 10.PY1, 10.PY2 erstrecken sich parallel zur zweiten Richtung y und sind ebenfalls zueinander beabstandet mit einem Abstand Dy angeordnet. Vorteilhafterweise entspricht die Anordnung der ersten Feldwechselwirkungsmittel 10.X1, 10.X2, 10.Y1, 10.Y2 bzw. der Feldwechselwirkungspaare 10.PX1, 10.PX2, 10.PY1, 10.PY2 einer Viereckanordnung, insbesondere in Form eines Quadrats (Dx = Dy).

Vorteilhafterweise überschneiden bzw. überlagern sich die einzelnen ersten Feldwechselwirkungsmittel 10.X1, 10.X2, 10.Y1, 10.Y2 bzw. die Feldwechselwirkungspaare 10.PX1, 10.PX2, 10.PY1, 10.PY2 der Viereckanordnung teilweise oder vollständig in den Ecken A, B, C, D der Viereckanordnung.

Unter einer Überlagerung ist ein Überlappen von wenigstens zwei benachbarten und orthogonal zueinander liegenden ersten Feldwechselwirkungsmitteln 10.X1, 10.X1', 10.X1", 10.X2, 10.X2', 10.X2", 10.Y1, 10.Y1', 10.Y1", 10.Y2, 10.Y2', 10.Y2" bzw. Feldwechselwirkungspaaren 10.PX1, 10.PX2, 10.PY1, 10.PY2 zu verstehen, die sich bei einer in der dritten Richtung z betrachteten Draufsicht ergibt.

Unter einer teilweisen Überlagerung ist zu verstehen, dass die Überlagerungsfläche der wenigstens zwei benachbarten und orthogonal zueinander liegenden ersten Feldwechselwirkungsmittel 10.X1, 10.X1', 10.X1", 10.X2, 10.X2', 10.X2", 10.Y1, 10.Y1', 10.Y1", 10.Y2, 10.Y2', 10.Y2" bzw. Feldwechselwirkungspaare 10.PX1, 10.PX2, 10.PY1, 10.PY2 nicht der größtmöglichen Überlagerungsfläche entspricht.

Unter einer vollständigen Überlagerung ist zu verstehen, dass die Überlagerungsfläche der wenigstens zwei benachbarten und orthogonal zueinander liegenden ersten Feldwechselwirkungsmittel 10.X1, 10.X1', 10.X1", 10.X2, 10.X2', 10.X2", 10.Y1, 10.Y1', 10.Y1", 10.Y2, 10.Y2', 10.Y2" bzw. Feldwechselwirkungspaare 10.PX1, 10.PX2, 10.PY1, 10.PY2 der größtmöglichen Überlagerungsfläche entspricht.

Beispielsweise erfolgt dabei eine vollständige Überlagerung aller benachbarten ersten Feldwechselwirkungsmittel 10.X1, 10.X1', 10.X1", 10.X2, 10.X2', 10.X2", 10.Y1, 10.Y1', 10.Y1", 10.Y2, 10.Y2', 10.Y2" bzw. Feldwechselwirkungspaare 10.PX1, 10.PX2, 10.PY1, 10.PY2 in allen vier Ecken A, B, C, D der Viereckanordnung, so dass die erste Wechselwirkungsoberfläche 11 möglichst klein ausfällt, wodurch sich eine besonders kompakte erste Baugruppe 10 realisieren lässt. Idealerweise stehen dabei die einzelnen ersten Feldwechselwirkungsmittel 10.X1, 10.X1', 10.X1", 10.X2, 10.X2', 10.X2", 10.Y1, 10.Y1', 10.Y1", 10.Y2, 10.Y2', 10.Y2" bzw. Feldwechselwirkungspaare 10.PX1, 10.PX2, 10.PY1, 10.PY2 in den Ecken A, B, C, D nicht oder nur geringfügig über.

Insbesondere bei der Anordnung der ersten Feldwechselwirkungsmittel 10.X1', 10.X1", 10.X2', 10.X2", 10.Y1', 10.Y1", 10.Y2', 10.Y2" zu Feldwechselwirkungspaaren 10.PX1, 10.PX2, 10.PY1, 10.PY2 kann vorgesehen sein, dass, wie in den Figuren 1, 6a und 6b gezeigt ist, für die innen liegenden ersten Feldwechselwirkungsmittel 10.X1", 10.X2", 10.Y1", 10.Y2" eine (vollständige) Überlagerung der Erregermittel 10.2 und Empfangsmittel 10.23, 10.24, 10.25, 10.26 der benachbarten innen liegenden ersten Feldwechselwirkungsmittel 10.X1", 10.X2", 10.Y1", 10.Y2" in den Ecken A, B, C, D vorliegt. Bei den außen liegenden ersten Feldwechselwirkungsmitteln 10.X1', 10.X2', 10.Y1', 10.Y2' erfolgt dann eine (vollständige) Überlagerung der Erregermittel 10.2, jedoch nicht der Empfangsmittel 10.23, 10.24, 10.25, 10.26.

Jedoch ist auch eine Überlagerung der Erregermittel 10.2 und der Empfangsmittel 10.23, 10.24, 10.25, 10.26 sowohl für die innenliegenden ersten Feldwechselwirkungsmittel 10.X1", 10.X2", 10.Y1", 10.Y2" als auch für die außen liegenden ersten Feldwechselwirkungsmittel 10.X1', 10.X2', 10.Y1', 10.Y2' möglich.

Durch die beiden in der ersten Richtung x bzw. in der zweiten Richtung y versetzten Empfangsmittel 10.21, 10.22, 10.23, 10.24, 10.25, 10.26 jedes ersten Feldwechselwirkungsmittels 10.X1, 10.X2, 10.Y1, 10.Y2 bzw. jedes Feldwechselwirkungspaars 10.PX1, 10.PX2, 10.PY1, 10.PY2 liefert jedes Feldwechselwirkungsmittel 10.X1, 10.X2, 10.Y1, 10.Y2 bzw. jedes Feldwechselwirkungspaar 10.PX1, 10.PX2, 10.PY1, 10.PY2 zwei Messgrößen in Form eines 0°-Signals und eines 90°-Signals, so dass insgesamt acht Messgrößen für eine Positionsbestimmung nutzbar sind.

Je erstem Feldwechselwirkungsmittel 10.X1, 10.X2, 10.Y1, 10.Y2 bzw. Feldwechselwirkungspaar 10.PX1, 10.PX2, 10.PY1, 10.PY2 wird aus den 0°- und 90°-Signalen zunächst ein linearer Positionswert in der entsprechenden Richtung x, y sowie eine Signalamplitude ermittelt. Die Signalamplitude kann dazu verwendet werden, einen Abstandswert zu bilden. Der Abstandswert eines ersten Feldwechselwirkungsmittels 10.X1, 10.X2, 10.Y1, 10.Y2 bzw. Feldwechselwirkungspaars 10.PX1, 10.PX2, 10.PY1, 10.PY2 quantifiziert den Abstand des entsprechenden Feldwechselwirkungsmittels 10.X1, 10.X2, 10.Y1, 10.Y2 bzw. Feldwechselwirkungspaars 10.PX1, 10.PX2, 10.PY1, 10.PY2 zur zweiten Wechselwirkungsoberfläche 21 der zweiten Baugruppe 20 in der dritten Richtung z.

Wie in Figur 5 gezeigt ist, liefert das erste Feldwechselwirkungsmittel 10.X1 bzw. das Feldwechselwirkungspaar 10.PX1 eine erste Messinformation X1 umfassend einen ersten Positionswert für die erste Richtung x und eine erste Signalamplitude für die Bestimmung eines Positionswerts für die dritte Richtung z. Analog hierzu liefert das erste Feldwechselwirkungsmittel 10.X2 bzw. das Feldwechselwirkungspaar 10.PX2 eine zweite Messinformation X2 umfassend einen zweiten Positionswert für die erste Richtung x und eine zweite Signalamplitude für die Bestimmung eines Positionswerts für die dritte Richtung z; das erste Feldwechselwirkungsmittel 10.Y1 bzw. das Feldwechselwirkungspaar 10.PY1 liefert eine dritte Messinformation Y1 umfassend einen dritten Positionswert für die zweite Richtung y und eine dritte Signalamplitude für die Bestimmung eines Positionswerts für die dritte Richtung z; das erste Feldwechselwirkungsmittel 10.Y2 bzw. das Feldwechselwirkungspaar 10.PY2 liefert eine vierte Messinformation Y2 umfassend einen vierten Positionswert für die zweite Richtung y und eine vierte Signalamplitude für die Bestimmung eines Positionswerts für die dritte Richtung z.

Folglich liefert die induktive Positionsmesseinrichtung 1 während eines Messzyklus jeweils zwei Messinformationen X1, X2 für die erste Richtung x und zwei Messinformationen Y1, Y2 für die zweite Richtung y, wobei jede der Messinformationen X1, X2, Y1, Y2 sich aus wenigstens einem Positionswert und wenigstens einer Signalamplitude zusammensetzt.

Auf diese Weise kann die relative Position und Ausrichtung der ersten Baugruppe 10 zur zweiten Baugruppe 20 in bis zu sechs Freiheitsgraden bestimmt werden.

Die Figuren 6a und 6b zeigen eine schematische Darstellung der induktiven Positionsmesseinrichtung 1 in Draufsicht, wobei bei der ersten Baugruppe 10 nur die erste Wechselwirkungsoberfläche 11 mit mehreren paarweise angeordneten ersten Feldwechselwirkungsmitteln 10.X1', 10.X1", 10.X2', 10.X2", 10.Y1', 10.Y1", 10.Y2', 10.Y2" gezeigt ist. Die erste und zweite Baugruppe 10, 20 sind gegenüberliegend und in zwei parallelen Ebenen angeordnet, so dass ein Luftspalt zwischen der ersten und zweiten Baugruppe 10, 20 ausgebildet ist. Die erste Baugruppe 10 befindet sich in Figur 6a in einer ersten Position. Figur 6b zeigt die erste Baugruppe 10 aus Figur 6a zu einem späteren Zeitpunkt, wobei diese nun ausgelenkt ist und eine zweite Position eingenommen hat. Beim Übergang von der ersten in die zweite Position ist durch die erste Baugruppe 10 eine Relativrotation um die Koordinatenachse der dritten Richtung z vollzogen worden. Die zweite Baugruppe 20 ist dabei unbewegt und stationär geblieben. Die induktive Positionsmesseinrichtung 1 ist in der Lage, eine oder mehrere Relativrotationen der ersten Baugruppe 10 in den drei Richtungen x, y, z zu bestimmen und auszuwerten.

Wie in den Figuren 6a und 6b schematisch gezeigt ist, erfolgt eine Positionsbestimmung vorzugsweise auf Basis jener Feldwechselwirkungspaare 10.PX1, 10.PX2, 10.PY1, 10.PY2, bei denen sich eine ausreichend starke Kopplung ausbildet, d. h. für jene Feldwechselwirkungspaare 10.PX1, 10.PX2, 10.PY1, 10.PY2 und zweite Feldwechselwirkungsmittel 20.1 bis 20.n, die sich bei einer in der dritten Richtung z betrachteten Draufsicht zumindest teilweise überlagern. Vorteilhafterweise sind die ersten Feldwechselwirkungsmittel 10.X1', 10.X1", 10.X2', 10.X2", 10.Y1', 10.Y1", 10.Y2', 10.Y2" jeweils größer ausgebildet als die zweiten Feldwechselwirkungsmittel 20.1 bis 20.n, so dass stets mehrere zweite Feldwechselwirkungsmittel 20.1 bis 20.n von zumindest einem ersten Feldwechselwirkungsmittel 10.X1', 10.X1", 10.X2', 10.X2", 10.Y1', 10.Y1", 10.Y2', 10.Y2" überlagert sind. Dabei überlagern insbesondere die Empfangsmittel 10.23, 10.24, 10.25, 10.26 der ersten Feldwechselwirkungsmittel 10.X1', 10.X1", 10.X2', 10.X2", 10.Y1', 10.Y1", 10.Y2', 10.Y2" mehrere zweite Feldwechselwirkungsmittel 20.1 bis 20.n.

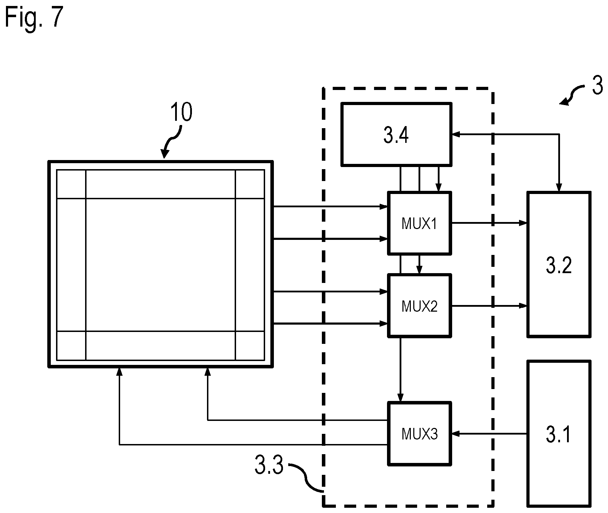

Figur 7 zeigt eine Auswerteelektronik 3 der induktiven Positionsmesseinrichtung 1 als schematisches Blockdiagramm.

Die Auswerteelektronik 3 umfasst als Signalgeneratormodul 3.1 einen Erregerschwingkreis, als Auswertemodul 3.2 eine anwendungsspezifische integrierte Schaltung (ASIC) und eine Umschalteinheit 3.3. Zum Speichern von aktuellen und historischen Geschwindigkeiten kann das Auswertemodul 3.2 zudem Zugriff auf ein nicht-flüchtiges Speichermodul haben.

Die Umschalteinheit 3.3 umfasst ein Steuermodul 3.4, beispielsweise einen Microcontroller, welcher drei Multiplexer MUX1, MUX2, MUX3 ansteuert und zusätzlich mit der Verarbeitungseinheit 3.2 kommuniziert.

Die einzelnen ersten Feldwechselwirkungsmittel 10.X1, 10.X2, 10.Y1, 10.Y2; 10.X1', 10.X1", 10.X2', 10.X2", 10.Y1', 10.Y1",10.Y2', 10.Y2" bzw. Feldwechselwirkungspaare 10.PX1, 10.PX2, 10.PY1, 10.PY2 sind an die Auswerteelektronik 3 angeschlossen, wobei die Auswerteelektronik 3 die einzelnen ersten Feldwechselwirkungsmittel 10.X1, 10.X2, 10.Y1, 10.Y2; 10.X1', 10.X1",10.X2', 10.X2",10.Y1', 10.Y1", 10.Y2', 10.Y2" bzw. Feldwechselwirkungspaare 10.PX1, 10.PX2, 10.PY1, 10.PY2 zyklisch und abwechselnd mit einer vorbestimmten Umschaltfrequenz betreibt.

Die vorbestimmte Umschaltfrequenz, die die Wechselhäufigkeit zwischen einem Anschluss von vorbestimmten ersten Feldwechselwirkungsmitteln 10.X1, 10.X1', 10.X1", 10.X2, 10.X2', 10.X2", 10.Y1, 10.Y1', 10.Y1", 10.Y2, 10.Y2', 10.Y2" bzw. Feldwechselwirkungspaaren 10.PX1, 10.PX2, 10.PY1, 10.PY2 an das Signalgeneratormodul 3.1 bzw. das Auswertemodul 3.2 vorgibt, wird durch die Umschalteinheit 3.3 so gewählt, dass eine zuverlässige Positions- und Ausrichtungsbestimmung erfolgt.

Dies kann beispielsweise durch eine adaptive Umschaltfrequenz erfolgen, die in Abhängigkeit der historischen relativen Geschwindigkeiten und ergänzend oder alternativ der aktuellen relativen Geschwindigkeit der Auslenkung der ersten Baugruppe 10 laufend angepasst wird. Die vorbestimmte Umschaltfrequenz wird stets so gewählt, dass eine zuverlässige Positions- und Ausrichtungsbestimmung in Echtzeit erfolgen kann: Wird die erste Baugruppe 10 schnell ausgelenkt, wird eine entsprechend erhöhte Umschaltfrequenz gewählt. Erfolgt keine Auslenkung der ersten Baugruppe 10 oder nur eine geringfügige Auslenkung, wird eine konstante oder entsprechend verringerte Umschaltfrequenz genutzt.

Vorteilhafterweise werden jene Feldwechselwirkungspaare 10.X1, 10.X2; 10.Y1, 10.Y2, die zueinander parallel und entlang einer identischen Richtung x, y angeordnet sind, gleichzeitig betrieben. Das heißt, dass innerhalb eines Messzyklus zunächst nur die in der ersten Richtung x verlaufenden Feldwechselwirkungspaare 10.PX1 und 10.PX2 betrieben werden. Hierbei erfolgt ein zeitweiser Anschluss der Erregermittel 10.2 der beiden Feldwechselwirkungspaare 10.PX1, 10.PX2 an das Signalgeneratormodul 3.1 und darauffolgend ein gesonderter Anschluss der Empfangsmittel 10.23, 10.24, 10.25, 10.26 der beiden Feldwechselwirkungspaare 10.PX1, 10.PX2 an das Auswertemodul 3.2. Anschließend erfolgt ein Betreiben nur der in der zweiten Richtung y verlaufenden Feldwechselwirkungspaare 10.PY1, 10.PY2. Hierbei erfolgt ein zeitweiser Anschluss der Erregermittel 10.2 der beiden Feldwechselwirkungspaare 10.PY1, 10.PY2 an das Signalgeneratormodul 3.1 und darauffolgend ein gesonderter Anschluss der Empfangsmittel 10.23, 10.24, 10.25, 10.26 der beiden Feldwechselwirkungspaare 10.PY1, 10.PY2 an das Auswertemodul 3.2.

Durch das abwechselnde Betreiben der ersten Feldwechselwirkungsmittel 10.X1, 10.X1', 10.X1", 10.X2, 10.X2', 10.X2", 10.Y1, 10.Y1', 10.Y1", 10.Y2, 10.Y2', 10.Y2" bzw. Feldwechselwirkungspaare 10.PX1, 10.PX2, 10.PY1, 10.PY2 in der ersten und zweiten Richtung x, y ergibt sich der Vorteil, dass Elektronikbauteile innerhalb der Auswerteelektronik eingespart werden können, da nur ein Signalgeneratormodul 3.1 und nur ein Verarbeitungsmodul 3.2 benötigt wird, welche für beide Richtungen x, y gleichermaßen verwendet werden.

Die Positionsbestimmung erfolgt innerhalb eines vordefinierten Messbereichs gemäß einem absoluten Messverfahren. Der Messbereich ist abhängig von der Länge der ersten Feldwechselwirkungsmittel 10.X1, 10.X2, 10.Y1, 10.Y2; 10.X1', 10.X1", 10.X2', 10.X2", 10.Y1', 10.Y1", 10.Y2', 10.Y2" in der entsprechenden ersten oder zweiten Richtung x, y bzw. von den resultierenden 0°- und 90°-Signalen.

Zu Messbeginn werden die erste und zweite Baugruppe 10, 20 innerhalb des Messbereichs definiert zueinander ausgerichtet, beispielsweise durch eine zentrierte Positionierung der ersten Baugruppe 10 relativ zur zweiten Baugruppe 20 (siehe Figur 6a). Kommt es zur relativen Auslenkung der ersten Baugruppe 10 gegenüber der zweiten Baugruppe 20, kann die absolute Position der ersten Baugruppe innerhalb des Messbereichs bestimmt werden.

Bevorzugt ist die Fläche der zweiten Wechselwirkungsoberfläche 21 kleiner oder gleich der Fläche des Messbereichs.

## Patentansprüche

1. Induktive Positionsmesseinrichtung (1), umfassend eine erste Baugruppe (10) mit einer ersten Wechselwirkungsoberfläche (11) und eine zweite Baugruppe (20) mit einer zweiten Wechselwirkungsoberfläche (21), wobei die Baugruppen (10, 20) in einer dritten Richtung (z) einander gegenüberliegend angeordnet und relativ zueinander bewegbar sind,
wobei die erste Baugruppe (10) mehrere erste Feldwechselwirkungsmittel (10.X1, 10.X2, 10.Y1, 10.Y2; 10.X1', 10.X1",10.X2', 10.X2", 10.Y1', 10.Y1", 10.Y2', 10.Y2") umfasst, welche parallel zur ersten Wechselwirkungsoberfläche (11) angeordnet und an eine
Auswerteelektronik (3) angeschlossen sind,
wobei die zweite Baugruppe (20) mehrere zweite Feldwechselwirkungsmittel (20.1 bis 20.n) umfasst, welche flächig verteilt über die zweite Wechselwirkungsoberfläche (21) angeordnet sind,
wobei die ersten und zweiten Feldwechselwirkungsmittel (10.X1, 10.X2, 10.Y1, 10.Y2; 10.X1', 10.X1", 10.X2', 10.X2", 10.Y1', 10.Y1", 10.Y2', 10.Y2"; 20.1 bis 20.n) in elektromagnetische Wechselwirkung bringbar sind,
**dadurch gekennzeichnet,**
**dass** die induktive Positionsmesseinrichtung (1) zumindest vier erste Feldwechselwirkungsmittel (10.X1, 10.X2, 10.Y1, 10.Y2; 10.X1', 10.X1", 10.X2', 10.X2", 10.Y1', 10.Y1", 10.Y2', 10.Y2") in Form von Linearsensoren umfasst, welche als Viereck entlang einer ersten und zweiten Richtung (x, y) angeordnet sind, wobei die ersten Feldwechselwirkungsmittel (10.X1, 10.X2, 10.Y1, 10.Y2; 10.X1', 10.X1", 10.X2', 10.X2", 10.Y1', 10.Y1", 10.Y2', 10.Y2") sich zumindest teilweise in den Ecken (A, B, C, D) der Viereck-Anordnung überlagern.

2. Induktive Positionsmesseinrichtung nach Anspruch 1, **dadurch gekennzeichnet, dass** die ersten Feldwechselwirkungsmittel (10.X1, 10.X2, 10.Y1, 10.Y2; 10.X1', 10.X1", 10.X2', 10.X2", 10.Y1', 10.Y1", 10.Y2', 10.Y2") jeweils zumindest ein Erregermittel (10.1; 10.2) zum Erzeugen eines elektromagnetischen Felds und zumindest ein Empfangsmittel (10.21, 10.22; 10.23, 10.24, 10.25, 10.26) zum Empfangen eines elektromagnetischen Felds umfassen.

3. Induktive Positionsmesseinrichtung nach Anspruch 2, **dadurch gekennzeichnet, dass** die ersten Feldwechselwirkungsmittel (10.X1, 10.X2, 10.Y1, 10.Y2; 10.X1', 10.X1", 10.X2', 10.X2", 10.Y1', 10.Y1", 10.Y2', 10.Y2")
• jeweils ein erstes Empfangsmittel (10.21; 10.23, 10.25) und ein zweites Empfangsmittel (10.22; 10.24, 10.26) umfassen, welche einen periodischen Verlauf mit konstanter Periodenlänge (T1; T2) aufweisen, wobei die Empfangsmittel (10.21, 10.22; 10.23, 10.24, 10.25, 10.26) in einer der ersten oder zweiten Richtung (x, y) um ein Viertel ihrer Periodenlänge (T1; T2) zueinander versetzt angeordnet sind, und
• jeweils ein Erregermittel (10.1; 10.2) umfassen, welches die zwei Empfangsmittel (10.21, 10.22; 10.23, 10.24, 10.25, 10.26) umgibt.

4. Induktive Positionsmesseinrichtung nach zumindest einem der vorhergehenden Ansprüche, **dadurch gekennzeichnet, dass** die erste Baugruppe (10) vier erste Feldwechselwirkungsmittel (10.X1, 10.X2, 10.Y1, 10.Y2) umfasst, die in der ersten Wechselwirkungsoberfläche (11) und jeweils senkrecht zueinander angeordnet sind.

5. Induktive Positionsmesseinrichtung nach Anspruch 3 und 4, **dadurch gekennzeichnet, dass** die Empfangsmittel (10.21, 10.22) der vier ersten Feldwechselwirkungsmittel (10.X1, 10.X2, 10.Y1, 10.Y2) derart ausgebildet sind, dass ihre Schwingungsbreite (SB1) mindestens einer Periodenlänge (T1) entspricht.

6. Induktive Positionsmesseinrichtung nach einem der Ansprüche 1 bis 3, **dadurch gekennzeichnet, dass** die erste Baugruppe (10) acht erste Feldwechselwirkungsmittel (10.X1', 10.X1", 10.X2', 10.X2", 10.Y1', 10.Y1", 10.Y2', 10.Y2") umfasst, die in der ersten Wechselwirkungsoberfläche (11) und zu vier paarweise parallelen Feldwechselwirkungspaaren (10.PX1, 10.PX2, 10.PY1, 10.PY2) angeordnet sind, wobei die vier Feldwechselwirkungsmittelpaare (10.PX1, 10.PX2, 10.PY1, 10.PY2) jeweils senkrecht zueinander angeordnet sind.

7. Induktive Positionsmesseinrichtung nach Anspruch 3 und 6, **dadurch gekennzeichnet,**
• **dass** die ersten Empfangsmittel (10.23, 10.25) von zumindest einem Feldwechselwirkungspaar (10.PX1, 10.PX2, 10.PY1, 10.PY2) gleich ausgebildet sind und seriell verschaltet sind,
• **dass** die zweiten Empfangsmittel (10.24, 10.26) von zumindest einem Feldwechselwirkungspaar (10.PX1, 10.PX2, 10.PY1, 10.PY2) gleich ausgebildet sind und seriell verschaltet sind,
• **dass** die Empfangsmittel (10.23, 10.24, 10.25, 10.26) der Feldwechselwirkungspaare (10.PX1, 10.PX2, 10.PY1, 10.PY2) derart ausgebildet sind, dass diese eine Schwingungsbreite (SB2) aufweisen, die weniger als die Hälfte der Periodenlänge (T2) beträgt,
• **dass** der Abstand (V3) zwischen zwei Empfangsmitteln (10.23, 10.24; 10.25, 10.26) innerhalb zumindest eines Feldwechselwirkungspaars (10.PX1, 10.PX2, 10.PY1, 10.PY2) die Hälfte der Periodenlänge (T2) beträgt.

8. Induktive Positionsmesseinrichtung nach zumindest einem der vorhergehenden Ansprüche, **dadurch gekennzeichnet, dass** die zweiten Feldwechselwirkungsmittel (20.1 bis 20.n)
• viereckig, insbesondere quadratisch, ausgebildet sind und
• gleich groß und rasterartig gleichverteilt auf der zweiten Wechselwirkungsoberfläche (21) angeordnet sind.

9. Induktive Positionsmesseinrichtung nach zumindest einem der vorhergehenden Ansprüche, **dadurch gekennzeichnet, dass** das Viereck ein Rechteck, und insbesondere ein Quadrat, ist.

10. Induktive Positionsmesseinrichtung nach zumindest einem der vorhergehenden Ansprüche, **dadurch gekennzeichnet, dass** die zweiten Feldwechselwirkungsmittel (20.1 bis 20.n) mit einer planaren Technologie, insbesondere durch Dickschichttechnik und/oder Dünnschichttechnik hergestellt sind.

11. Induktive Positionsmesseinrichtung nach zumindest einem der vorhergehenden Ansprüche, wobei die ersten Feldwechselwirkungsmittel (10.X1, 10.X2, 10.Y1, 10.Y2; 10.X1', 10.X1", 10.X2', 10.X2", 10.Y1', 10.Y1", 10.Y2', 10.Y2") durch die Auswerteelektronik (3) mit einer vorbestimmten Umschaltfrequenz abwechselnd betreibbar sind.

12. Induktive Positionsmesseinrichtung nach Anspruch 11, **dadurch gekennzeichnet, dass** die vorbestimmte Umschaltfrequenz abhängig von der aktuellen relativen Geschwindigkeit und/oder den historischen relativen Geschwindigkeiten der ersten und/oder zweiten Baugruppe (10, 20) ist.

13. Induktive Positionsmesseinrichtung nach zumindest einem der vorhergehenden Ansprüche, **dadurch gekennzeichnet, dass** die Auswerteelektronik (3) wenigstens ein Signalgeneratormodul (3.1), wenigstens ein Auswertemodul (3.2) und wenigstens eine Umschalteinheit (3.3) umfasst, wobei die ersten Feldwechselwirkungsmittel (10.X1, 10.X2, 10.Y1, 10.Y2; 10.X1', 10.X1", 10.X2', 10.X2", 10.Y1', 10.Y1", 10.Y2', 10.Y2") über die wenigstens eine Umschalteinheit (3.3) wahlweise einzeln oder paarweise, entweder an das Auswertemodul (3.2) oder das Signalgeneratormodul (3.1) angeschlossen sind.

14. Induktive Positionsmesseinrichtung nach Anspruch 13, **dadurch gekennzeichnet, dass** die Umschalteinheit (3.3) zumindest einen Multiplexer (MUX1, MUX2, MUX3) und zumindest ein Steuermodul (3.4) umfasst, wobei das Steuermodul (3.4) den zumindest einen Multiplexer (MUX1, MUX2, MUX3) in Abhängigkeit der Umschaltfrequenz so ansteuert, dass ein paarweiser Anschluss der in einer identischen Richtung (x, y) verlaufenden ersten Feldwechselwirkungsmittel (10.X1, 10.X1', 10.X2, 10.X2', 10.Y1, 10.Y1', 10.Y2, 10.Y2') mit dem Auswertemodul (3.2) bzw. dem Signalgeneratormodul (3.1) erfolgt.

15. Induktive Positionsmesseinrichtung nach zumindest einem der vorhergehenden Ansprüche, **dadurch gekennzeichnet, dass** die zweite Baugruppe (20) nicht an eine aktive Energieversorgung und Datenverarbeitung angeschlossen ist.

## Claims

1. Inductive position measuring device (1) comprising a first assembly (10) having a first interaction surface (11) and a second assembly (20) having a second interaction surface (21), wherein the assemblies (10, 20) are arranged opposite each other in a third direction (z) and are movable relative to each other,
wherein the first assembly (10) comprises a plurality of first field interaction means (10.X1, 10.X2, 10.Y1, 10.Y2; 10.X1', 10.X1", 10.X2', 10.X2", 10.Y1', 10.Y1", 10.Y2', 10.Y2") which are arranged parallel to the first interaction surface (11) and are connected to evaluation electronics (3),
wherein the second assembly (20) comprises a plurality of second field interaction means (20.1 to 20.n) which are arranged so as to be distributed in a two-dimensional manner over the second interaction surface (21), wherein the first and second field interaction means (10.X1, 10.X2, 10.Y1, 10.Y2; 10.X1', 10.X1", 10.X2', 10.X2", 10.Y1', 10.Y1", 10.Y2', 10.Y2"; 20.1 to 20.n) can be brought into electromagnetic interaction, **characterized**
**in that** the inductive position measuring device (1) comprises at least four first field interaction means (10.X1, 10.X2, 10.Y1, 10.Y2; 10.X1', 10.X1", 10.X2', 10.X2", 10.Y1', 10.Y1", 10.Y2', 10.Y2") in the form of linear sensors which are arranged as a quadrangle along a first and second direction (x, y), wherein the first field interaction means (10.X1, 10.X2, 10.Y1, 10.Y2; 10.X1', 10.X1", 10.X2', 10.X2", 10.Y1', 10.Y1", 10.Y2', 10.Y2") overlap at least partially in the corners (A, B, C, D) of the quadrangle arrangement.

2. Inductive position measuring device according to Claim 1, **characterized in that** the first field interaction means (10.X1, 10.X2, 10.Y1, 10.Y2; 10.X1', 10.X1", 10.X2', 10.X2", 10.Y1', 10.Y1", 10.Y2', 10.Y2") each comprise at least one excitation means (10.1; 10.2) for generating an electromagnetic field and at least one receiving means (10.21, 10.22; 10.23, 10.24, 10.25, 10.26) for receiving an electromagnetic field.

3. Inductive position measuring device according to Claim 2, **characterized in that** the first field interaction means (10.X1, 10.X2, 10.Y1, 10.Y2; 10.X1', 10.X1", 10.X2', 10.X2", 10.Y1', 10.Y1", 10.Y2', 10.Y2")
• each comprise a first receiving means (10.21; 10.23, 10.25) and a second receiving means (10.22; 10.24, 10.26) which have a periodic profile with a constant period length (T1; T2), wherein the receiving means (10.21, 10.22; 10.23, 10.24, 10.25, 10.26) are arranged so as to be offset with respect to each other by a quarter of their period length (T1; T2) in either the first or second direction (x, y), and
• each comprise an excitation means (10.1; 10.2) which surrounds the two receiving means (10.21, 10.22; 10.23, 10.24, 10.25, 10.26).

4. Inductive position measuring device according to at least one of the preceding claims, **characterized in that** the first assembly (10) comprises four first field interaction means (10.X1, 10.X2, 10.Y1, 10.Y2) which are arranged in the first interaction surface (11) and are each arranged perpendicular to each other.

5. Inductive position measuring device according to Claims 3 and 4, **characterized in that** the receiving means (10.21, 10.22) of the four first field interaction means (10.X1, 10.X2, 10.Y1, 10.Y2) are designed such that their oscillation range (SB1) corresponds to at least one period length (T1).

6. Inductive position measuring device according to one of Claims 1 to 3, **characterized in that** the first assembly (10) comprises eight first field interaction means (10.X1', 10.X1", 10.X2', 10.X2", 10.Y1', 10.Y1", 10.Y2', 10.Y2") which are arranged in the first interaction surface (11) and in four pairs of parallel field interaction pairs (10.PX1, 10.PX2, 10.PY1, 10.PY2), wherein the four pairs of field interaction means (10.PX1, 10.PX2, 10.PY1, 10.PY2) are each arranged perpendicular to each other.

7. Inductive position measuring device according to Claims 3 and 6, **characterized**
• **in that** the first receiving means (10.23, 10.25) of at least one field interaction pair (10.PX1, 10.PX2, 10.PY1, 10.PY2) are designed in the same way and are connected in series,
• **in that** the second receiving means (10.24, 10.26) of at least one field interaction pair (10.PX1, 10.PX2, 10.PY1, 10.PY2) are designed in the same way and are connected in series,
• **in that** the receiving means (10.23, 10.24, 10.25, 10.26) of the field interaction pairs (10.PX1, 10.PX2, 10.PY1, 10.PY2) are designed in such a way that they have an oscillation range (SB2) that is less than half the period length (T2),
• **in that** the distance (V3) between two receiving means (10.23, 10.24; 10.25, 10.26) within at least one field interaction pair (10.PX1, 10.PX2, 10.PY1, 10.PY2) is half the period length (T2).

8. Inductive position measuring device according to at least one of the preceding claims, **characterized in that** the second field interaction means (20.1 to 20.n)
• are quadrangular, in particular square, and
• are of the same size and are arranged in a grid-like manner with uniform distribution on the second interaction surface (21).

9. Inductive position measuring device according to at least one of the preceding claims, **characterized in that** the quadrangle is a rectangle, and in particular a square.

10. Inductive position measuring device according to at least one of the preceding claims, **characterized in that** the second field interaction means (20.1 to 20.n) are produced using a planar technology, in particular by means of thick film technology and/or thin film technology.

11. Inductive position measuring device according to at least one of the preceding claims, wherein the first field interaction means (10.X1, 10.X2, 10.Y1, 10.Y2; 10.X1', 10.X1", 10.X2', 10.X2", 10.Y1', 10.Y1", 10.Y2', 10.Y2") can be operated alternately by the evaluation electronics (3) at a predetermined switching frequency.

12. Inductive position measuring device according to Claim 11, **characterized in that** the predetermined switching frequency is dependent on the current relative speed and/or the historical relative speeds of the first and/or second assembly (10, 20).

13. Inductive position measuring device according to at least one of the preceding claims, **characterized in that** the evaluation electronics (3) comprise at least one signal generator module (3.1), at least one evaluation module (3.2) and at least one switching unit (3.3), wherein the first field interaction means (10.X1, 10.X2, 10.Y1, 10.Y2; 10.X1', 10.X1", 10.X2', 10.X2", 10.Y1', 10.Y1", 10.Y2', 10.Y2") are connected either individually or in pairs, either to the evaluation module (3.2) or to the signal generator module (3.1), via the at least one switching unit (3.3).

14. Inductive position measuring device according to Claim 13, **characterized in that** the switching unit (3.3) comprises at least one multiplexer (MUX1, MUX2, MUX3) and at least one control module (3.4), wherein the control module (3.4) controls the at least one multiplexer (MUX1, MUX2, MUX3) on the basis of the switching frequency such that the first field interaction means (10.X1, 10.X1', 10.X2, 10.X2', 10.Y1, 10.Y1', 10.Y2, 10.Y2') running in an identical direction (x, y) are connected in pairs to the evaluation module (3.2) or the signal generator module (3.1).

15. Inductive position measuring device according to at least one of the preceding claims, **characterized in that** the second assembly (20) is not connected to an active energy supply and data processing.

## Revendications

1. Dispositif de mesure de position inductif (1) comprenant un premier ensemble (10) présentant une première surface d'interaction (11) et un deuxième ensemble (20) présentant une deuxième surface d'interaction (21), les ensembles (10, 20) étant disposés en vis-à-vis dans une troisième direction (z) et étant mobiles l'un par rapport à l'autre,
le premier ensemble (10) comprenant une pluralité de premiers moyens d'interaction de champ (10.X1, 10.X2, 10.Y1, 10.Y2 ; 10.X1', 10.X1", 10.X2', 10.X2", 10.Y1', 10.Y1", 10.Y2', 10.Y2") qui sont disposés parallèlement à la première surface d'interaction (11) et qui sont reliés à une électronique d'évaluation (3),
le deuxième ensemble (20) comprenant une pluralité de deuxièmes moyens d'interaction de champ (20.1 à 20.n) qui sont disposés de manière répartie à plat sur la deuxième surface d'interaction (21),
les premier et deuxième moyens d'interaction de champ (10.X1, 10.X2, 10.Y1, 10.Y2 ; 10.X1', 10.X1", 10.X2', 10.X2", 10.Y1', 10.Y1", 10.Y2', 10.Y2" ; 20.1 à 20.n) pouvant être amenés en interaction électromagnétique, **caractérisé**
**en ce que** le dispositif de mesure de position inductif (1) comprend au moins quatre premiers moyens d'interaction de champ (10.X1, 10.X2, 10.Y1, 10.Y2; 10.X1', 10.X1", 10.X2', 10.X2", 10.Y1', 10.Y1", 10.Y2', 10.Y2") sous la forme de capteurs linéaires qui sont disposés en quadrilatère le long d'une première et d'une deuxième direction (x, y), les premiers moyens d'interaction de champ (10.X1, 10.X2, 10.Y1, 10.Y2; 10.X1', 10.X1", 10.X2', 10.X2", 10.Y1', 10.Y1", 10.Y2', 10.Y2") étant au moins partiellement superposés dans les angles (A, B, C, D) de l'agencement en quadrilatère.

2. Dispositif de mesure de position inductif selon la revendication 1, **caractérisé en ce que** les premiers moyens d'interaction de champ (10.X1, 10.X2, 10.Y1, 10.Y2 ; 10.X1', 10.X1", 10.X2', 10.X2", 10.Y1', 10.Y1", 10.Y2', 10.Y2") comprennent respectivement au moins un moyen d'excitation (10.1 ; 10.2) pour générer un champ électromagnétique et au moins un moyen de réception (10.21, 10.22 ; 10.23, 10.24, 10.25, 10.26) pour recevoir un champ électromagnétique.

3. Dispositif de mesure de position inductif selon la revendication 2, **caractérisé en ce que** les premiers moyens d'interaction de champ (10.X1, 10.X2, 10.Y1, 10.Y2 ; 10.X1', 10.X1", 10.X2', 10.X2", 10.Y1', 10.Y1", 10.Y2', 10.Y2")
• comprennent respectivement un premier moyen de réception (10.21 ; 10.23, 10.25) et un deuxième moyen de réception (10.22 ; 10.24, 10.26) qui présentent un profil périodique ayant une longueur de période constante (T1 ; T2), les moyens de réception (10.21, 10.22 ; 10.23, 10.24, 10.25, 10.26) étant décalés les uns par rapport aux autres d'un quart de leur longueur de période (T1 ; T2) dans la première ou la deuxième direction (x, y), et
• comprennent respectivement un moyen d'excitation (10.1 ; 10.2) qui englobe les deux moyens de réception (10.21, 10.22 ; 10.23, 10.24, 10.25, 10.26).

4. Dispositif de mesure de position inductif selon au moins l'une des revendications précédentes, **caractérisé en ce que** le premier ensemble (10) comprend quatre premiers moyens d'interaction de champ (10.X1, 10.X2, 10.Y1, 10.Y2) qui sont disposés dans la première surface d'interaction (11) et respectivement perpendiculairement les uns aux autres.

5. Dispositif de mesure de position inductif selon les revendications 3 et 4, **caractérisé en ce que** les moyens de réception (10.21, 10.22) des quatre premiers moyens d'interaction de champ (10.X1, 10.X2, 10.Y1, 10.Y2) sont conçus de telle sorte que leur largeur d'oscillation (SB1) corresponde à au moins une longueur de période (T1).

6. Dispositif de mesure de position inductif selon l'une des revendications 1 à 3, **caractérisé en ce que** le premier ensemble (10) comprend huit premiers moyens d'interaction de champ (10.X1', 10.X1", 10.X2', 10.X2", 10.Y1', 10.Y1", 10.Y2', 10.Y2") qui sont disposés dans la première surface d'interaction (11) et en quatre paires d'interaction de champ (10.PX1, 10.PX2, 10.PY1, 10.PY2) parallèles par paires, les quatre paires de moyens d'interaction de champ (10.PX1, 10.PX2, 10.PY1, 10.PY2) étant disposées respectivement perpendiculairement les unes aux autres.

7. Dispositif de mesure de position inductif selon les revendications 3 et 6, **caractérisé**
• **en ce que** les premiers moyens de réception (10.23, 10.25) d'au moins une paire d'interaction de champ (10.PX1, 10.PX2, 10.PY1, 10.PY2) sont de conception identique et sont connectés en série,
• **en ce que** les deuxièmes moyens de réception (10.24, 10.26) d'au moins une paire d'interaction de champ (10.PX1, 10.PX2, 10.PY1, 10.PY2) sont de conception identique et sont connectés en série,
• **en ce que** les moyens de réception (10.23, 10.24, 10.25, 10.26) des paires d'interaction de champ (10.PX1, 10.PX2, 10.PY1, 10.PY2) sont conçus de manière à présenter une largeur d'oscillation (SB2) inférieure à la moitié de la longueur de période (T2),
• **en ce que** la distance (V3) entre deux moyens de réception (10.23, 10.24 ; 10.25, 10.26) au sein d'au moins une paire d'interaction de champ (10.PX1, 10.PX2, 10.PY1, 10.PY2) est égale à la moitié de la longueur de période (T2).

8. Dispositif de mesure de position inductif selon au moins l'une des revendications précédentes, **caractérisé en ce que** les deuxièmes moyens d'interaction de champ (20.1 à 20.n)
• sont de forme quadrangulaire, en particulier carrée, et
• sont de même taille et sont disposés de manière répartie uniformément selon une grille sur la deuxième surface d'interaction (21).

9. Dispositif de mesure de position inductif selon au moins l'une des revendications précédentes, **caractérisé en ce que** le quadrilatère est un rectangle, en particulier un carré.

10. Dispositif de mesure de position inductif selon au moins l'une des revendications précédentes, **caractérisé en ce que** les deuxièmes moyens d'interaction de champ (20.1 à 20.n) sont fabriqués selon une technologie planaire, en particulier par la technique des couches épaisses et/ou la technique des couches minces.

11. Dispositif de mesure de position inductif selon au moins l'une des revendications précédentes, dans lequel les premiers moyens d'interaction de champ (10.X1, 10.X2, 10.Y1, 10.Y2 ; 10.X1', 10.X1", 10.X2', 10.X2", 10.Y1', 10.Y1", 10.Y2', 10.Y2") peuvent être exploités en alternance à une fréquence de commutation prédéterminée par l'électronique d'évaluation (3).

12. Dispositif de mesure de position inductif selon la revendication 11, **caractérisé en ce que** la fréquence de commutation prédéterminée dépend de la vitesse relative actuelle et/ou des vitesses relatives historiques du premier et/ou du deuxième ensemble (10, 20).

13. Dispositif de mesure de position inductif selon au moins l'une des revendications précédentes, **caractérisé en ce que** l'électronique d'évaluation (3) comprend au moins un module générateur de signaux (3.1), au moins un module d'évaluation (3.2) et au moins une unité de commutation (3.3), les premiers moyens d'interaction de champ (10.X1, 10.X2, 10.Y1, 10.Y2 ; 10.X1', 10.X1", 10.X2', 10.X2", 10.Y1', 10.Y1", 10.Y2', 10.Y2") étant reliés, au choix, individuellement ou par paires, au module d'évaluation (3.2) ou au module générateur de signaux (3.1) par l'intermédiaire de l'au moins une unité de commutation (3.3).

14. Dispositif de mesure de position inductif selon la revendication 13, **caractérisé en ce que** l'unité de commutation (3.3) comprend au moins un multiplexeur (MUX1, MUX2, MUX3) et au moins un module de commande (3.4), le module de commande (3.4) commandant l'au moins un multiplexeur (MUX1, MUX2, MUX3) en fonction de la fréquence de commutation de telle manière qu'une connexion par paires des premiers moyens d'interaction de champ (10.X1, 10.X1', 10.X2, 10.X2', 10.Y1, 10.Y1', 10.Y2, 10.Y2') s'étendant dans une direction identique (x, y) soit effectuée avec le module d'évaluation (3.2) ou, respectivement, le module générateur de signaux (3.1).

15. Dispositif de mesure de position inductif selon au moins l'une des revendications précédentes, **caractérisé en ce que** le deuxième ensemble (20) n'est pas relié à un dispositif actif d'alimentation en énergie et de traitement de données actifs.
